Europäisches Patentamt

European Patent Office

Office européen des brevets

(11) Veröffentlichungsnummer: **0 351 633**
**A2**

## EUROPÄISCHE PATENTANMELDUNG

(21) Anmeldenummer: 89112161.8

(22) Anmeldetag: 04.07.89

(51) Int. Cl.⁴: **B65G 47/51** , **B65G 65/00**

(30) Priorität: 16.07.88 DE 3824230

(43) Veröffentlichungstag der Anmeldung:
**24.01.90 Patentblatt 90/04**

(84) Benannte Vertragsstaaten:
**AT CH DE FR GB IT LI SE**

(71) Anmelder: **Georg Spiess GmbH**
**Senefelderstrasse 1**
**D-8906 Gersthofen(DE)**

(72) Erfinder: **Klingl, Karl-Heinz**
**Schönblickstrasse 3**
**D-8902 Neusäss(DE)**

(74) Vertreter: **Munk, Ludwig, Dipl.-Ing.**
**Patentanwalt Prinzregentenstrasse 1**
**D-8900 Augsburg(DE)**

(54) **Vorrichtung zum Transport von Werkstücken.**

(57) Beim Transport von Leiterplatten oder dergleichen, die aufeinanderfolgend entlang einer stationären Längsfördereinrichtung (9) schrittweise voranbewegt werden und zur Pufferung über wenigstens
eine Schleife mit zwei zu sich gegenläufigen, quer
zur Längsfördereinrichtung (9) gerichteten Pufferstrecken umlenkbar sind, wird dadurch eine Beibehaltung der Werkstückreihenfolge gewährleistet und
ein Wenden der Werkstücke verhindert, daß die Pufferstrecken als die Längsfördereinrichtung (9) überragende Abschnitte von in Transportrichtung gegeneinander versetzten, gegenläufig zueinander antreibbaren Paternostern (10, 11) ausgebildet sind, die auf
einem quer zur Längsfördereinrichtung (9) bewegbaren Korb (4) aufgenommen sind, durch den die
Längsfördereinrichtung (4) hindurchführt und die im
Bereich ihrer der Längsfördereinrichtung (9) zugewandten Äste mit Werkstückträgern (15) bestückbar
sind, die auf ihrem die Längsfördereinrichtung (9)
kreuzenden Weg gegen Verschieben gesichert und
am oberen und unteren Ende der Paternoster (10,
11) mittels einer ebenfalls auf dem Korb vorgesehenen Verschiebeeinrichtung (24) gegenläufig um den
Abstand der Paternoster (10, 11) parallel zur Längsfördereinrichtung (9) verschoben werden können.

FIG. 5

## Vorrichtung zum Transport von Werkstücken

Die Erfindung betrifft ein Verfahren und eine Vorrichtung zum Transport von Werkstücken, insbesondere Leiterplatten, die aufeinanderfolgend entlang einer Transportstrecke schrittweise voranbewegt werden.

Bei der Herstellung von Leiterplatten oder dergleichen durchlaufen diese die verschiedenen Stationen einer automatisch gesteuerten Fertigungsstraße. Sofern im Bereich einer Fertigungsstation eine Störung auftritt, wird der Materialstrom an dieser Stelle unterbrochen. Andererseits kann aber normalerweise der Materialnachschub nicht unterbrochen werden. Es ist daher erforderlich, die bis zur Beseitigung der Störung ankommenden Werkstücke zu speichern. Dabei ist zu berücksichtigen, daß insbesondere auch bei der Herstellung von Leiterplatten vergleichsweise kleine Lose gleicher Leiterplat ten vorkommen können und daß nach dem Durchlauf jedes Loses die einzelnen Fertigungsstationen entsprechend umgestellt werden müssen, was in der Regel automatisch vor sich geht. Eine Änderung der Reihenfolge der aufeinanderfolgenden Leiterplatten könnte daher zu Störungen des gesamten Produktionsvorgangs führen und aufwendige Einstellungsarbeiten erforderlich machen. Außerdem ist zu berücksichtigen, daß auch eine Wendung der Werkstücke im Verlauf der Pufferung unerwünscht ist.

Es ist bekannt, zur Pufferung von Werkstücken ein umlaufendes Element mit umfangsseitig angeordneten Aufnahmegefachen für die Werkstücke vorzusehen. Hierbei ist jedoch eine Wendung der Werkstücke nur vermeidbar, wenn das umlaufende Element zum Ein- bzw. Auspuffern gegenläufig angetrieben wird, wobei aber nicht nur die Reihenfolge der Werkstücke geändert wird, sondern gleichzeitig auch der Nachschub unterbrochen werden muß. Hiermit sind daher die obengenannten Voraussetzungen nicht erfüllbar.

Hiervon ausgehend ist es daher die Aufgabe der vorliegenden Erfindung, beim Transport von Werkstücken eine Pufferung der Werkstücke zu ermöglichen, wobei die Reihenfolge und Lage der Werkstücke nicht verändert wird und dennoch eine stufenweise Füllung ohne Zwischenentleerung des Puffers möglich ist.

Diese Aufgabe wird verfahrensmäßig dadurch gelöst, daß die Werkstücke zur Pufferung über wenigstens eine Schleife mit zwei zu sich gegenläufigen, quer zur Transportstrecke gerichteten Pufferstrecken umlenkbar sind, deren Länge gemeinsam in Abhängigkeit von einer Zunahme oder Abnahme ihrer Füllung verändert wird, wobei nach jeder der Anzahl der vorhandenen Pufferstrecken entsprechenden Anzahl von Schritten der Transportstrecke der gesamte Puffer bei in ihm ruhenden Pufferstrecken um einen Schritt und dazwischen nach jedem Schritt der Transportstrecke die Pufferstrecken bei ruhendem Puffer um jeweils einen Schritt bewegt werden und wobei nach jeder Bewegung der Pufferstrecken bei ruhendem Puffer am Ende der Pufferstrecken eine zur Transportstrecke parallele Übersetzung der Werkstücke von einer Pufferstrecke zur nächsten erfolgt.

Ausgehend von einer Vorrichtung mit einer Längsfördereinrichtung und einem quer hierzu angeordneten Puffer wird diese Aufgabe dadurch gelöst, daß die Längsfördereinrichtung durch einen quer zu ihr bewegbaren Korb hindurchführt, auf dem wenigstens zwei in Laufrichtung der Längsfördereinrichtung gegeneinander versetzte, parallel zur Bewegungsrichtung des Korbs angeordnete, gegenläufig zueinander antreibbare Paternoster vorgesehen sind, die im Bereich ihrer der Fördereinrichtung zugewandten Äste mit parallel zur Längsfördereinrichtung verschiebbar geführten Werkstückträgern bestückbar sind, die im Bereich zwischen den Astenden die Längsfördereinrichtung kreuzen und gegen Verschieben gesichert und im Bereich der Astenden mittels einer auf dem Korb vorgesehenen Verschiebeeinrichtung gegenläufig um den Abstand der Paternoster parallel zur Längsfördereinrichtung verschiebbar sind.

Diese Maßnahmen stellen sicher, daß der Puffer von seinem Ausgang her befüllt wird, d. h. das zuerst in den Puffer einlaufende Werkstück steht bereits als erstes Werkstück am Ausgang des Puffers an, während dieser weiter befüllt werden kann. Wenn am Ausgang des Puffers Werkstücke abgegeben werden können, wird der Puffer nicht mehr weiter gefüllt, sondern von den Werkstücken im Durchlaufbetrieb durchwandert, wobei die Reihenfolge der Werkstücke beibehalten wird. Hierdurch ist es möglich, unabhängig davon, ob der Puffer ganz gefüllt ist oder nur teilweise gefüllt ist, die Pufferung zu beenden bzw. zu unterbrechen und die Fertigungsstraße mit Werkstücken in der gewünschten Reihenfolge weiter zu beschicken, ohne daß vor einer weiteren Aufstockung des Pufferinhalts der Materialnachschub unterbrochen werden müßte. In vorteilhafter Weise ist daher zwischen aufeinanderfolgenden Puffervorgängen mit teilweiser Füllung des Puffers eine Zwischenentleerung des Puffers nicht erforderlich. Die erfindungsgemäßen Maßnahmen gewährleisten somit eine kontinuierliche Pufferung. Ein weiterer Vorteil der erfindungsgemäßen Maßnahmen ist darin zu sehen, daß die Werkstücke beim Durchgang durch den Puffer infolge der Gegenläufigkeit der Pufferstrecken und der transportstreckenparallelen Übergabe von einer Pufferstrecke zur nächsten auch nicht gewendet oder verdreht werden und damit nicht nur in der gewünschten Reihenfolge, sondern auch in der gewünschten Lage und Ausrichtung an die Transportstrecke abgegeben werden können.

Zum Auffüllen des Puffers werden die beiden gegenläufigen Pufferstrecken, die durch den die Längsfördereinrichtung überragenden Bereich der Paternoster gebildet werden, durch entsprechende Aktivierung des den Puffer enthaltenden Korbs verlängert und umgekehrt. Bei Durchlaufbetrieb mit ganz oder teilweise gefülltem Puffer wird die Länge der Pufferstrecken gleich gehalten, indem einfach die Bewegung des Korbs ausfällt, was eine einfache Steuerung ergibt.

In weiterer Fortbildung der übergeordneten Maßnahmen kann der Korb in einem von der Längsfördereinrichtung durchsetzten Turm auf- und abbewegbar aufgenommen sein, dessen lichte Höhe die Höhe des Korbs zumindest um die Länge der geraden Äste der Paternoster übersteigt. Die Fördereinrichtung kann dabei mit zumindest der Länge der geraden Äste der Paternoster entsprechendem Bodenabstand angeordnet sein. Diese Maßnahmen ergeben eine kompakte, eine geringe Grundfläche erfordernde Anordnung, da die Werkstücke hierbei übereinander gepuffert werden.

Vorteilhaft können zwei gegeneinander versetzte, gegenläufige Paternoster durch wenigstens ein Winkelgetriebe mit einem Eingang und zwei Ausgängen antriebsmäßig miteinander verbunden sein. Hierbei ergibt sich automatisch die gewünschte Gegenläufigkeit der Paternoster und gleichzeitig ein exakter Synchronlauf.

Vorteilhaft können die gegeneinander versetzten Paternoster jeweils an endlosen, im Bereich des oberen und unteren Endes des Korbs umgelenkten Ketten befestigte, in Laufrichtung der Längsfördereinrichtung verlaufende Lagerschienen aufweisen, auf denen die Werkstückträger verschiebbar aufnehmbar sind. Diese Maßnahmen ermöglichen eine störungsfreie Übergabe der Werkstückträger von einem Paternoster zum anderen und zurück.

Eine weitere zweckmäßige Maßnahme kann darin bestehen, daß zumindest die zu einer Seite der Längsfördereinrichtung vorgesehenen Lagerschienen beider Paternoster und die zwischen die Lagerschienen eingreifenden Führungselemente der Werkstückträger prismenförmige Querschnitte aufweisen, was in vorteilhafter Weise einen zuverlässigen Formschluß quer zur gewünschten Bewegungsrichtung ergibt.

In weiterer Fortbildung können die Werkstückträger im Bereich zwischen den am oberen bzw. unteren Ende des Korbs vorgesehenen Umkehrbereichen der Paternoster durch am Korb befestigte, parallel zur Paternosterlaufrichtung angeordnete Führungsschienen gegen Verschieben gesichert sein, die jeweils einen im Umkehrbereich endenden Führungskanal für ein durchlaufendes Halteelement der Werkstückträger aufweisen. Hierdurch ist sichergestellt, daß sich die Werkstückträger außerhalb der gewünschten Übergabepositionen nicht selbsttätig parallel zur Längsfördereinrichtung verschieben können.

Eine weitere zweckmäßige Maßnahme kann darin bestehen, daß die Verschiebeeinrichtung als die Paternoster umfassendes Umlauforgan ausgebildet ist, das mit Mitnehmern versehen ist, mit denen an den Werkstückträgern vorgesehene Gegenhalter durch den jeweils zugehörigen Paternoster in und außer Eingriff bringbar sind. Hierdurch ist sichergestellt, daß die Übergabe der Werkstückträger von einem Paternoster an den nächsten und die Rückführung in umgekehrter Richtung mit ein- und dem selben Bauteil erfolgen kann, was eine einfache Bauweise und hohe Funktionssicherheit gewährleistet.

Eine weitere vorteilhafte Maßnahme besteht darin, daß die als durch seitlich gegeneinander versetzte Bänder gebildete Bandführung ausgebildete Längsfördereinrichtung im Bereich jedes Paternosters jeweils eine Lücke aufweist. Hierdurch ist sichergestellt, daß die die Längsfördereinrichtung kreuzenden Werkstückträger jeweils wenigstens einen über die Breite des Korbs durchgehenden, die Lücken der Bandführung passierenden Querholm aufweisen können, an dem zwischen den Bändern der Bandführung hindurchbewegbare Tragleisten befestigt sein können, was den Aufbau stark vereinfacht.

Weitere vorteilhafte Ausgestaltungen und zweckmäßige Fortbildungen der übergeordneten Maßnahmen ergeben sich aus der nachstehenden Beschreibung eines bevorzugten Ausführungsbeispiels anhand der Zeichnung in Verbindung mit den restlichen Unteransprüchen.

In der Zeichnung zeigen:

Figur 1 eine Seitenansicht einer erfindungsgemäßen Vorrichtung,

Figur 2 eine Draufsicht auf die Anordnung nach Figur 1 teilweise im Schnitt,

Figur 3 eine Frontansicht des den Puffer enthaltenden Korbs,

Figur 4 eine Einzelheit auf Figur 3,

Figur 5 eine Seitenansicht des Korbs in einer mittleren Stellung und

Figur 6 ein Materialflußschema für die erfindungsgemäße Vorrichtung.

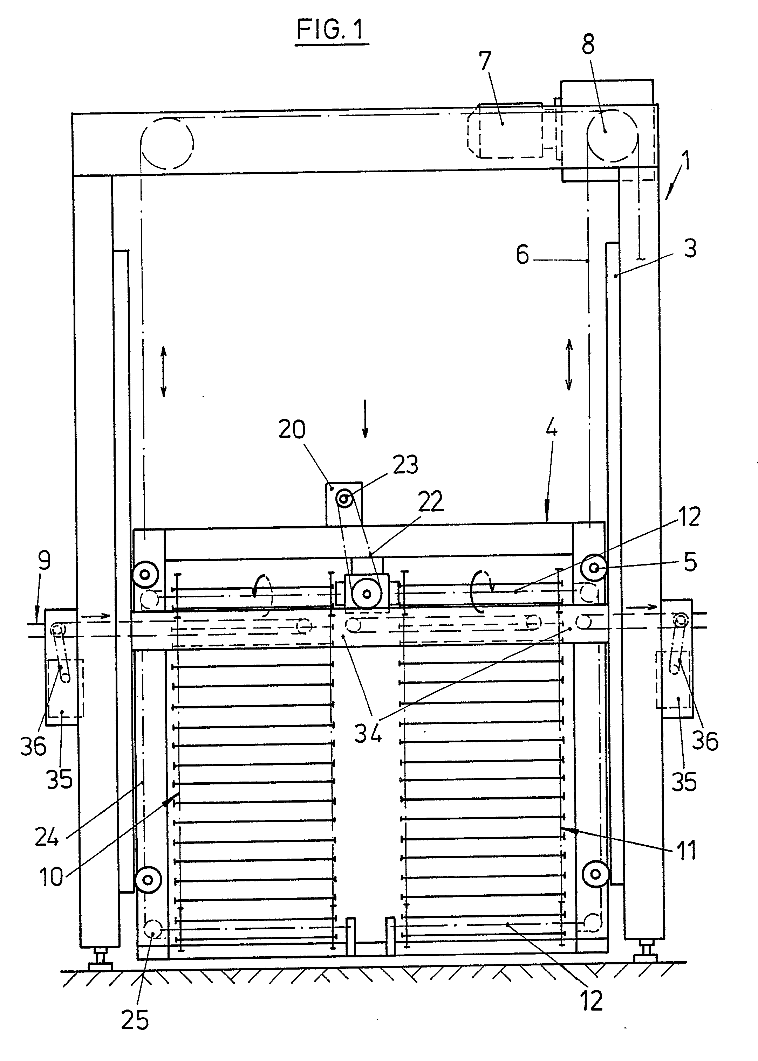

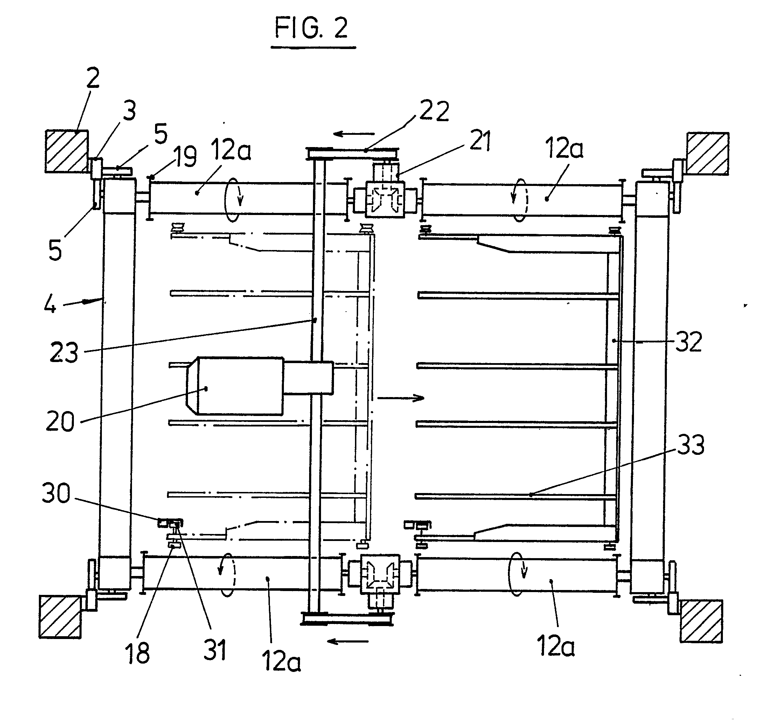

Die der Figur 1 zugrundeliegende Puffereinrichtung besteht aus einem Turm 1 mit vier Ecksäulen 2, die in den Eckpunkten eines Rechtecks angeordnet sind, wie am besten aus Figur 2 erkennbar ist. Die Ecksäulen 2 sind im Bereich ihrer nach innen weisenden Kanten mit einstellbaren Führungsschienen 3 versehen, an denen ein im Turm 1 auf- und abbewegbar angeordneter Korb 4 geführt ist. Hierzu ist der durch ein würfelförmiges Raumgerüst mit im Bereich der Würfelkanten angeordneten Holmen gebildete Korb 4 im Bereich seiner lotrechten Außenkanten mit rechtwinklig zueinander angeordneten Rollen 5 versehen, die auf rechtwinklig zueinanderstehenden Flanken der Führungsschienen 3 laufen, wie weiter Figur 2 am besten zeigt. Der Korb 4 ist an Hubketten 6 aufgehängt, die am oberen Ende des Turms 1 umgelenkt und über mittels eines am Turm 1 befestigten Hubmotors 7 betätigbare Antriebsräder 8 geführt sind. Die lichte Höhe des Turms 1 läßt genügend vertikalen Bewegungsfreiheitsgrad für den Korb 4.

Der Turm 1 übergreift eine durch eine mit Bodenabstand angeordnete, stationäre Bandführung gebildete Längsfördereinrichtung 9, durch die Werkstücke, wie Leiterplatten oder dergl., nacheinander einer Bearbeitungsstation zugeführt werden sollen. Die Längsfördereinrichtung 9 durchsetzt dabei den im Turm 1 vertikal verschiebbar aufgenommenen Korb 4 in horizontaler Richtung. Der Bodenabstand der Längsfördereinrichtung 9 ist so, daß sie den Korb 4 in der der Figur 1 zugrundeliegenden untersten Stellung des Korbs 4 im oberen Korbbereich durchsetzt. Der Hubfreiheitsgrad des Korbs 4 ist so, daß er soweit angehoben werden kann, daß die Längsfördereinrichtung 9 ihn in der obersten Stellung im unteren Korbbereich durchsetzt.

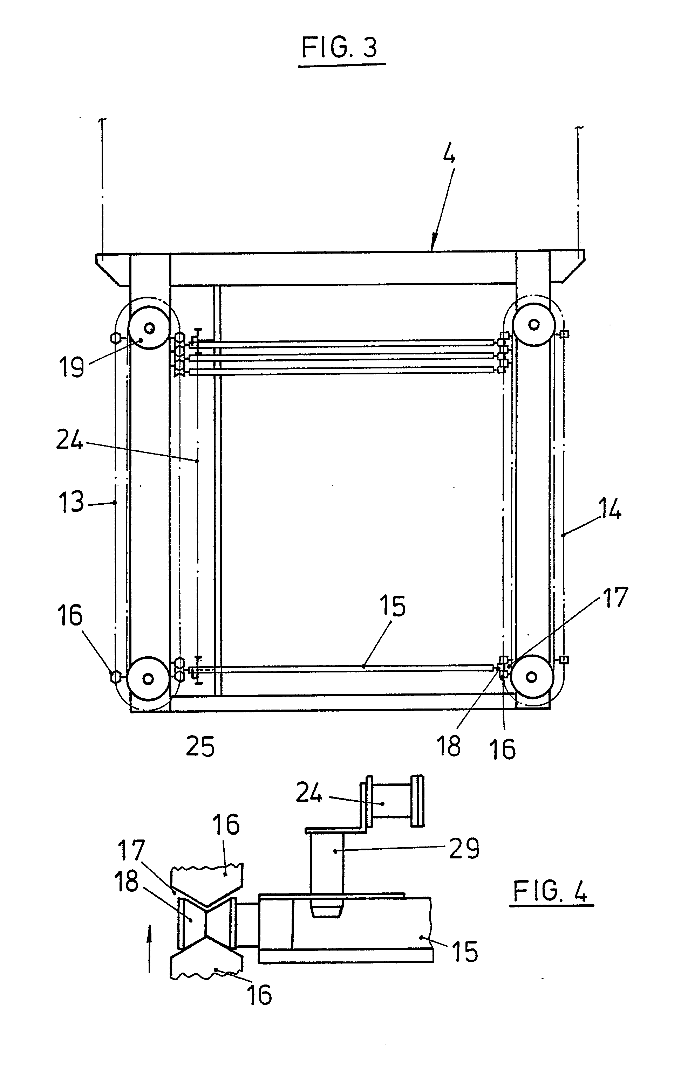

Der Korb 4 ist mit zwei in Laufrichtung der Längsfördereinrichtung gegeneinander versetzten Paternostern 10, 11 mit jeweils einander übergreifenden, längsfördereinrichtungsparallelen Umlenkachsen 12 versehen, von denen sich eine oberhalb und eine unterhalb der Längsfördereinrichtung 9 befindet. Die auf- und ablaufenden Trums der endlosen Paternoster 10, 11 kreuzen dementsprechend die Transportebene der Längsfördereinrichtung 9. Jeder Paternoster 10, 11 besteht, wie am besten aus Figur 3 erkennbar ist, aus jeweils zwei bezüglich der Längsfördereinrichtung 9 einander gegenüberliegenden, das heißt die Längsfördereinrichtung 9 flankierenden, an den längsfördereinrichtungsparallelen Korbaußenseiten angeordneten, endlosen Läufern 13, 14, an deren einander zugewandten Trums palettenförmige Werkstückträger 15 mit ihren seitlichen Flanken verschiebbar aufgenommen sind. Hierzu sind die einander gegenüberliegenden, endlosen Läufer 13, 14 auf ihrem ganzen Umfang mit in Laufrichtung der Längsfördereinrichtung 9 verlaufenden Laufschienen 16 bestückt, die zur Bildung von Führungskanälen 17 mit gegenseitigem Abstand angeordnet sind. Die palettenförmigen Werkstückträger 15 besitzen seitliche Rollen 18, die in die Führungskanäle 17 eingeschoben werden können.

Im Bereich eines Läufers, bei der Ausführung gemäß Figur 3 im Bereich des rechten Läufers 14, besitzen die Laufschienen 16 und dementsprechend die hiervon begrenzten Führungskanäle 17 und die in diese einschiebbaren Rollen 18 rechteckförmigen Querschnitt. Im Bereich des gegenüberliegenden Läufers, hier des linken Läufers 13, besitzen die Laufschienen 16 einen solchen Querschnitt, daß sich ein prismenförmiger Querschnitt der Führungskanäle 17 ergibt. Die einen angepaßten, prismenförmigen Querschnitt aufweisenden Laufrollen 18 werden dementsprechend in seitlicher Richtung, das heißt quer zur Längserstreckung der Laufschienen 16 formschlüssig gesichert, wie am besten aus Figur 4 erkennbar ist.

Die Läufer 13 bzw. 14 bestehen jeweils aus zwei über die Länge der Laufschienen 16 verteilten, diese tragenden Kettenpaaren, die über im Bereich des oberen und unteren Korbendes angeordnete Umlenkorgane 19 laufen, die auf die Umlenkachsen 12 enthaltenden, fördereinrichtungsparallelen Wellen 12a aufgenommen sind. Diese sind zur Führung der Laufschienen 16 im Umlenkbereich als Führungstrommeln ausgebildet, wie am besten aus Figur 2 erkennbar ist. Eine der Wellen 12a, hier die jeweils obere, ist angetrieben. Zum Antrieb der einander gegenüberliegenden Läufer 13, 14 der beiden Paternoster 10, 11 ist ein auf den Korb 4 aufgenommener Antriebsmotor 20 vorgesehen.

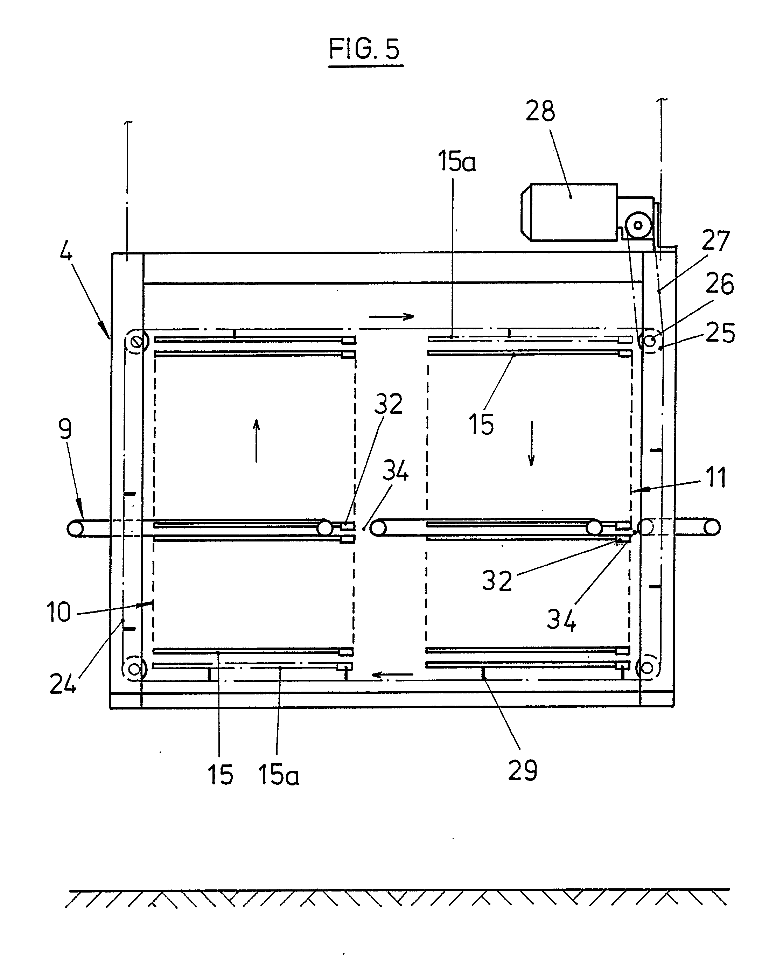

Die beiden in Förderrichtung der Längsfördereinrichtung 9 hintereinander angeordneten Paternoster 10, 11 werden gegenläufig angetrieben. Der stromaufwärts angeordnete Paternoster 10 wird, wie aus Figuren 1 und 5 ersichtlich ist, so angetrieben, daß sich die einander zugewandten, die Längsfördereinrichtung 9 flankierenden Trums seiner Läufer 13, 14 von unten nach oben bewegen. Der stromabwärts angeordnete Paternoster 11 wird so angetrieben, daß sich die inneren, die Längsfördereinrichtung 9 flankierenden Trums seiner Läufer 13, 14 von oben nach unten bewegen. Zur Erzielung dieser Gegenläufigkeit ist zwischen den fluchtend hintereinander angeordneten Wellen 12a jeweils beider Läufer 13 bzw. 14 ein Winkelgetriebe 21 angeordnet, das einen, durch ein Vorgelege 22 mit dem Antriebsmotor 20 verbundenen Eingang und zwei mit den Wellen 12a verbundene, gegenläufige Ausgänge aufweist. Die beiden Vorgelege 22 der auf beiden Seiten des Korbs 4 angeordneten Winkelgetriebe 21 werden mittels einer über die ganze Breite des Korbs sich erstreckenden Welle 23 überbrückt, die durch den Antriebsmotor 20 angetrieben wird, so daß exakter Synchronlauf vorliegt. Der Antriebsmotor 20 ist, wie am besten aus Figuren 1 und 2 erkennbar ist, auf den Korb 4 aufgesetzt.

Die Werkstückträger 15 werden, wie am besten aus Figur 5 erkennbar ist, im Bereich des oberen Endes der geraden, inneren Trums der Paternosterläufer 13, 14 vom stromaufwärts gelegenen Paternoster 10 auf den stromabwärts gelegenen Paternoster 11 verschoben und im Bereich des unteren Endes der geraden, inneren Trums der Paternosterläufer 13, 14 vom stromabwärts gelegenen Paternoster 11 auf den stromaufwärts gelegenen Paternoster 10 übergeben, so daß sich ein Kreislauf der Werkstückträger 15 ergibt. Die Anzahl der auf jedem Paternoster 10, 11 vorhandenen Werkstückträger 15 ist zumindest, vorzugsweise exakt um die Zahl 1 kleiner als die Anzahl der im Bereich der geraden, inneren Trums der Paternosterläufer 13, 14 jeweils vorhandenen Führungskanäle 17, wobei der freie Führungskanal 17 jeweils der oberste oder unterste Führungskanal eines Paternosters ist. Dieser Führungskanal befindet sich auch in den Extremstellungen des Korbs 4 oberhalb bzw. unterhalb der Längsfördereinrichtung 9, so daß der Kreislauf der Werkstückträger 15 die Transportebene der Längsfördereinrichtung 9 im Bereich des stromaufwärts gelegenen Paternosters 10 von unten nach oben und im Bereich des stromabwärts gelegenen Paternosters 11 von oben nach unten kreuzt. Die in den Führungskanälen 17 aufgenommenen Werkstückträger 15 sind infolge der längsfördereinrichtungsparallelen Ausrichtung der Laufschienen 16 längsfördereinrichtungsparallel ausgerichtet und werden bei der Übergabe von einem Paternoster zum anderen längsfördereinrichtungsparallel verschoben. Die Werkstückträger 15 werden daher trotz der Gegenläufigkeit der Paternoster 10, 11 nicht gewendet, sondern behalten ihre Orientierung bei, das heißt die Oberseite der Werkstückträger 15 bleibt auf dem gesamten Umlauf die Oberseite und umgekehrt.

Zur Bewerkstelligung der Verschiebung der Werkstückträger 15 oberhalb der Längsfördereinrichtung 9 stromabwärts und unterhalb der Längsfördereinrichtung 9 stromaufwärts ist der Korb 4 mit einer Verschiebeeinrichtung 24 versehen, die als die beiden Paternoster 10, 11 umgreifendes Umlauforgan ausgebildet ist, wie in Figur 1 angedeutet und in Figur 5 noch besser hervorgehoben ist. Das die Verschiebeeinrichtung 24 bildende Umlauforgan enthält im Bereich der stromaufwärtigen und stromabwärtigen Endes des Korbs 4 vertikal verlaufende, das heißt die Ebene der Längsfördereinrichtung 9 durchstoßende Äste und im Bereich der oberen und unteren Enden der geraden Trums der Paternosterläufer 13, 14 horizontal verlaufende, das heißt längsfördereinrichtungsparallele, in Verschieberichtung der Werkstückträger 15 verlaufende Äste. In Figur 2 ist die Verschiebeeinrichtung 24 aus Gründen der Übersichtlichkeit weggeblieben. Das die Verschiebeeinrichtung 24 bildende Umlauforgan wird durch eine endlose Kette oder ein endloses Band gebildet, die bzw. das über in den Eckpunkten des rechteckförmigen Umlaufs angeordnete Umlenkorgane 25 geführt ist, deren Achsen quer zur Förderrichtung der Längsfördereinrichtung 9 verlaufen. Die Umlenkorgane 25 sind auf diese Achsen enthaltenden Wellen 26 aufgenommen, von denen eine, wie Figur 5 weiter erkennen läßt, über ein Vorgelege 27 mit einem auf den Korb 4 aufgesetzten Antriebsmotor 28 verbunden ist. Das die Verschiebeeinrichtung 24 bildende Umlauforgan ist auf seinem Umfang mit nach innen vorstehenden Mitnehmern 29 versehen, die hier einfach als Stifte ausgebildet sind, die zum Eingriff mit den Werkstückträgern 15 bzw. trägerseitigen Gegenhaltern kommen, wenn die Werkstückträger 15 durch den Paternoster 10 angehoben bzw. durch den Paternoster 11 abgesenkt werden. Infolge der Aufwärtsbewegung des stromaufwärtigen Paternosters 10 werden die Werkstückträger 15 im Bereich des oberen Endes der geraden Trums der Paternosterläufer 13, 14 in die nach unten ragenden Stifte eingehoben und im Bereich des unteren Endes der geraden Trums der Paternosterläufer 13, 14 in Form eines in die in Figur 5 mit strichpunktierten Linien angedeutete Leerposition gebrachten Werkstückträgers 15a aus den nach oben ragenden Mitnehmern 29 ausgehoben. Im Bereich des nach unten laufenden Paternosters 11 werden die Werkstückträger 15 unten in die nach oben ragenden Mitnehmer 25 eingelegt und oben in Form eines in die Leerposition 15a gebrachten Werkstückträgers aus den nach unten ragenden Mitnehmern 29 ausgehoben. Der Figur 4 liegt die Eingriffssituation während des Verschiebevorgangs im Bereich des oberen Paternosterendes zugrunde. Die Steuerung der Verschiebeeinrichtung 24 und die Anordnung der Mitnehmer 19 und der diesen zugeordneten, werkstückträgerseitigen Gegenhalter sind so gewählt, daß die Werkstückträger 15 am oberen bzw. unteren Ende ihrer nach oben bzw. nach unten gehenden Bewegung in einen in der richtigen Position wartenden Mitnehmer 29 einlaufen.

Im Bereich des jeweils obersten bzw. untersten Führungskanals 17 der geraden, inneren Trums der Paternosterläufer 13, 14 sind die miteinander fluchtenden Führungskanäle 17, in denen eine Verschiebung der Werkstückträger 15 stattfindet, auf den einander zugewandten Seiten offen, so daß eine Übergabe stattfinden kann. Bei größerem Abstand der nebeneinander angeordneten Paternoster können im Zwischenbereich mit den Führungskanälen fluchtende, stationäre Leitelemente vorgesehen sein. Im Bereich zwischen diesen Übergabepositionen, das heißt von oberhalb des untersten Führungskanals bis unterhalb des obersten Führungskanals der geraden Trums der Paternosterläufer 13, 14 sind die Werkstückträger 15 in Längsrichtung der Laufschienen 16 und dementsprechend in Verschieberichtung verriegelt. Hierzu sind in Figur 2 dargestellte, parallel zur Hub- bzw. Senkrichtung der Paternoster verlaufende Führungsschienen 30 vorgesehen, die jeweils einen in der unteren bzw. oberen Verschiebeposition endenden Führungskanal für an den Werkstückträgern 15 vorgesehene Halteelemente 31 in Form von Rollen etc., bilden. Die Führungsschienen 30 können als quer zur Verschieberichtung, hier nach außen offene U-Schienen ausgebildet sein, die vertikal, das heißt parallel zur Bewegungsrichtung der Paternoster 10, 11 verlaufen und so zwischen den Verschiebepositionen angeordnet sind, daß die Halteelemente 31 der im jeweils obersten bzw. untersten Führungskanal 17 der geraden Trums der Paternosterläufer 13, 14 aufgenommenen Werkstückträger 15 freigegeben sind.

Die Werkstückträger 15 bestehen hier, wie Figur 2 weiter zeigt, aus einem den Abstand zwischen den Paternosterläufern 13, 14 überbrückenden Querholm 32, an dem in Transportrichtung der Längsfördereinrichtung 9 verlaufende Tragleisten 33 rechenartig befestigt sind. Die äußeren Tragleisten können dabei die in die Führungskanäle 17 eingreifenden Rollen 18 und das in die Führungsschiene 30 eingreifende Halteelement 31 tragen. Die von den Werkstückträgern 15 auf ihrem geschlossenem Umlauf zweimal gekreuzte Längsfördereinrichtung 9 ist, wie den Figuren 1 und 5 entnehmbar ist, im Bereich des Korbs 4 mit zwei Unterbrechungen 34 versehen, die so angeordnet sind, daß die über die Breite durchgehenden Querholme 32 der Werkstückträger 15 beim Kreuzen der Transportebene der Längsfördereinrichtung 9 durch sie hindurch passieren können. Über die Breite gesehen besteht die Längs fördereinrichtung 9 aus mehreren, mit Abstand nebeneinander angeordneten Bändern, zwischen denen die Tragleisten 33 der Werkstückträger 15 durchlaufen können. Zum Antrieb des einlaufseitigen Abschnitts der Längsfördereinrichtung 9 ist ein am Turm 1 befestigter Antriebsmotor 35 mit nachgeschaltetem Vorgelege 36 vorgesehen. Der auslaufende Abschnitt der Längsfördereinrichtung 9 ist separat vom einlaufenden Abschnitt in derselben Weise antreibbar. Die Unterbrechungen 34 befinden sich hier im Bereich der stromabwärtigen Seite des jeweils zugeordneten Paternosters. Der zwischen diesen Unterbrechungen 34 sich befindende Abschnitt der Längsfördereinrichtung 9 wird dementsprechend mit dem auslaufseitigen Abschnitt angetrieben. Die separate Antreibbarkeit der Abschnitte der Längsfördereinrichtung ermöglicht eine wahlweise Aktivierung bzw. Passivierung des Materialnachschubs und des Materialausgangs aus der dargestellten Pufferungseinrichtung.

Bei normalem, störungsfreiem Betrieb der durch die Längsfördereinrichtung 9 beaufschlagbaren Fertigungsstationen sind sämtliche Abschnitte der Längsfördereinrichtung 9 angetrieben und die Paternoster 10, 11 in eine solche Ruhestellung gebracht, daß die Transportebene der Längsfördereinrichtung 9 zwischen zwei aufeinanderfolgenden Werkstückträgern 15 sich befindet, so daß die auf der Längsfördereinrichtung 9 aufliegenden Werkstücke ohne Umlenkung durch den Turm 1 hindurchtransportiert werden. Im Falle einer Störung wird der ausgangsseitige Abschnitt der Längsfördereinrichtung 9 passiviert und läuft nur noch der eingangsseitige Abschnitt. Die an kommenden Werkstücke werden durch Aktivierung der vorliegenden Pufferungseinrichtung bis zur Beseitigung der Störung gepuffert. Hierzu werden die Werkstücke mit Hilfe der Werkstückträger 15 im Bereich des die Werkstückträger 15 nach oben führenden Paternosters 10 von unten von der Längsfördereinrichtung 9 abgehoben und oberhalb dieser gespeichert, wobei die oberhalb der Längsfördereinrichtung 9 sich befindenden Bereiche der beiden Paternoster 10, 11 zwei parallele, durch die Verschiebeeinrichtung 24 miteinander verbundene Pufferstrecken bilden, deren Länge durch Anheben des Korbs 4 veränderbar ist, wie aus einem Vergleich der Figuren 1 und 5 leicht ersichtlich ist. Beim Auspuffern werden die auf den Werkstückträgern 15 aufgenommenen Werkstücke im Bereich des die Werkstückträger 15 nach unten transportierenden Paternosters 11 von oben auf der Längsfördereinrichtung 9 abgelegt, wobei die oberhalb der Längsfördereinrichtung 9 sich befindenden Pufferstrecken durch Absenken des Korbs 4 verkürzt werden. Die unterhalb der Längsfördereinrichtung 9 sich befindenden Bereiche der Paternoster 10, 11 bilden zwei durch die Verschiebeeinrichtung 24 miteinander verbundene, Werkstückträgerrückführstrecken, deren Länge gegenläufig zur Länge der Pufferstrecken verändert wird.

Die Auspufferung, das heißt die Entleerung der Pufferstrecken, erfolgt bei fehlendem Materialnachschub. Bei nichtabreißendem Materialnachschub geht bei Beendigung der Pufferung der Materialfluß durch die Pufferstrecken hindurch, deren Länge in diesem Falle infolge Ruhen des Korbs gleichbleibt. Gleichgültig, ob der Korb bewegt wird oder nicht, das heißt ob ein- bzw. ausgepuffert wird oder nicht, wird jeweils der die Verschiebeposition am oberen Paternosterende erreichende Werkstückträger vom eingangsseitigen, nach oben laufenden Paternoster 10 zum ausgangsseitigen, nach unten laufenden Paternoster 11 verschoben, wobei die Anzahl der unterhalb der Verschiebeposition sich befindenden Werkstückträger von der momentanen Position des Korbs 4 abhängt, der, wie schon gesagt, bei Durchlaufbetrieb in einer Position festgehalten und beim Ein- und Auspuffern angehoben bzw. abgesenkt wird.

Der Antrieb der jeweils bewegten Organe erfolgt schrittweise und so aufeinander abgestimmt, daß jeweils die gewünschte Betriebsweise, das heißt Durchlaufbetrieb bzw. Einpufferung bzw. Auspufferung, erreicht wird. Bei Durchlaufbetrieb durch die Puffereinrichtung, das heißt bei schleifenförmiger Umlenkung der Werkstücke zwischen dem einlaufenden und dem auslaufenden Abschnitt der Längsfördereinrichtung 9 sind die Taktzahlen der Längsfördereinrichtung 9 und der auf dem hier ruhenden Korb aufgenommenen Paternoster 10, 11 und der Verschiebeeinrichtung 24 gleich. Lediglich die Bewegungsphasen sind so gegeneinander versetzt, daß Störungen vermieden werden. Beim Ein- bzw. Auspuffern werden die Paternoster und der Korb abwechselnd schrittweise bewegt. Ihre Taktzahl ist in diesem Fall dementsprechend nur halb so groß wie die Taktzahl der Längsfördereinrichtung 9. Dasselbe gilt für die Taktzahl der Verschiebeeinrichtung 24. Die beiden Pufferstrecken werden dabei gleichmäßig länger bzw. kürzer, wobei jedoch stets ein schleifenförmiger, im Bereich des Paternosters 10 von unten nach oben und im

Bereich des Paternosters 11 von oben nach unten gehender Materialfluß beibehalten wird, so daß die Werkstücke in jedem Falle in der Reihenfolge ihrer Abnahme von der Längsfördereinrichtung 9 auf diese wieder abgegeben werden können, wobei infolge der geradlinigen Verschiebung der Werkstückträger mittels der Verschiebeeinrichtung 24 trotz des schleifenförmigen Materialflusses ein Wenden der Werkstücke unterbleibt.

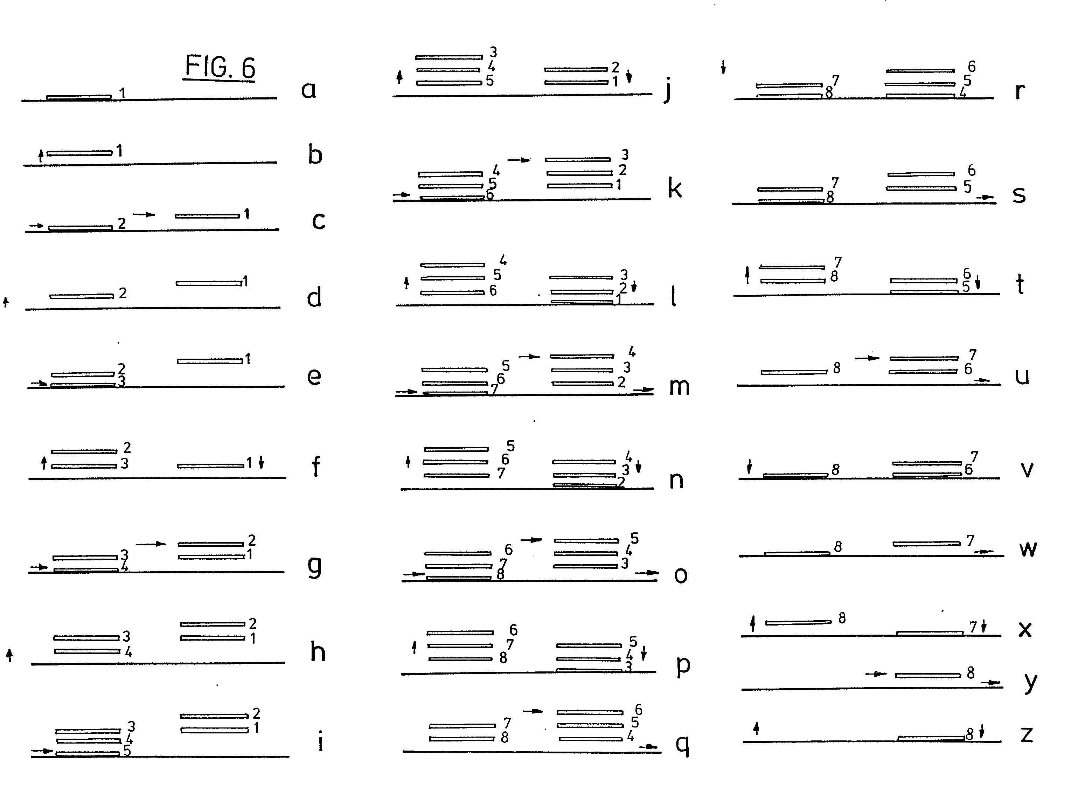

Die gegenseitige Abstimmung der Bewegungsphasen der einzelnen Organe in den verschiedenen Betriebsweisen ist am besten aus Figur 6 ersichtlich. Hierbei sind jeweils lediglich die Förderebene der Längsfördereinrichtung 9 und die Position der oberhalb dieser sich befindenden, mit Werkstücken beladenen Werkstückträger angedeutet, wobei diese entsprechend ihrer Aufeinanderfolge mit 1 bis 8 nummeriert sind. Die Teilfiguren 6a bis 6k enthalten dabei die Betriebsweise "Einpuffern". Die Teilfiguren 6l bis 6o enthalten die Betriebsweise "Durchlauf nach Pufferung" und die Teilfiguren 6p bis 6z enthalten die Betriebsweise "Auspuffern".

Beim Einpuffern läuft lediglich der eingangsseitige Abschnitt der Längsfördereinrichtung 9. Nach jedem Schritt dieses Abschnitts der Längsfördereinrichtung 9 erfolgt abwechselnd ein Schritt der gegenläufigen Paternoster 10, 11 oder des Korbs 4. Zusammen mit jedem auf einen Paternosterschritt folgenden, also zusammen mit jedem zweiten Schritt der Längsfördereinrichtung 9 macht auch die Verschiebeeinrichtung 24 einen Schritt und verschiebt dabei die durch den vorhergehenden Schritt der Paternoster 10, 11 mit ihr am oberen Ende des Paternosters 10 und am unteren Ende des Paternosters 11 in Eingriff gebrachten Werkstückträger 15 in die infolge des vorangegangenen Schritts der Paternoster unbelegten, durch die Kanäle 17 gebildeten Aufnahmestellen des jeweils anderen Paternosters. Die Ausgangssituation gemäß Teilfigur 6a entspricht dabei der Stellung bei leerem Puffer wie sie auch der Figur 1 zugrunde liegt. Der Korb 4 soll sich dabei in seiner untersten Stellung befinden, so daß die Paternoster 10, 11 die Längsfördereinrichtung 9 mit lediglich einem Führungskanal 17, also einer Aufnahmestelle für einen Werkstückträger 15 überragen. Die Verschiebeeinrichtung 24 soll dabei die eine Aufnahmestelle des eingangsseitigen geordneten Paternosters 10 bereits geräumt haben. Dasselbe gilt für die unterste Aufnahmestelle des Paternosters 11 unterhalb der Längsfördereinrichtung. Mit dem nun folgenden ersten Schritt des aktivierten Einlaufabschnitts der Längsfördereinrichtung wird das erste Werkstück in den Wirkbereich des Paternosters 10 gebracht, wie in Teilfigur 6a angedeutet ist. Anschließend machen die Paternoster 10, 11 einen Schritt, wobei das Werkstück von der Transportebene der Längsfördereinrichtung 9 abgehoben und in die Verschiebeposition gebracht wird, wie Teilfigur 6b zeigt. Mit dem nun folgenden Schritt der Längsfördereinrichtung macht auch die Verschiebeeinrichtung 24 einen Schritt, womit das erste Werkstück auf der Höhe der Verschiebeposition in den Wirkbereich des Paternosters 11 und ein zweites Werkstück in den Wirkbereich des Paternosters 10 gelangen, wie Teilfigur 6c zeigt. Hierauf folgt nun ein Schritt des Korbs 4, womit erreicht wird, daß die Pater noster 10, 11 die Transportebene der Längsfördereinrichtung mit jeweils zwei Aufnahmestellen überragen, von denen nun die jeweils unteren nicht belegt sind, wie aus Teilfigur 6d hervorgeht. Beim anschließenden Schritt der Längsfördereinrichtung 9 wird ein drittes Werkstück unterhalb des zweiten Werkstücks in den Wirkbereich des Paternosters 10 gebracht, wie Teilfigur 6e zeigt. Anschließend erfolgt nun wieder ein Schritt der gegenläufigen Paternoster, womit das erste Werkstück im Bereich des Paternosters 11 um eine Position nach unten versetzt wird und sich dementsprechend in der ersten Position des Paternosters 11 oberhalb der Längsfördereinrichtung 9 befindet. Das zweite und dritte Werkstück werden im Bereich des Paternosters 10 um jeweils eine Position nach oben versetzt, wie aus Teilfigur 6f ersichtlich ist. Diese Versetzung der Werkstücke ist möglich, weil aufgrund des vorhergehenden Hubs des Korbs 4 gemäß Teilfigur 6d die benötigten Leeraufnahmestellen geschaffen wurden. Gleichzeitig werden dabei der das erste Werkstück aufnehmende Werkstückträger außer und der das zweite Werkstück aufnehmende Werkstückträger in Eingriff mit der Verschiebeeinrichtung 24 gebracht.

Der umgekehrte Vorgang spielt sich am unteren Ende der Paternoster ab, wie oben schon angedeutet wurde. Anschließend erfolgen nun wieder ein Schritt des Einlaufabschnitts der Längsfördereinrichtung und der Verschiebeeinrichtung, womit das zweite Werkstück oberhalb des ersten Werkstücks im Wirkbereich des auslaufseitigen Paternosters positioniert wird und das vierte Werkstück unterhalb des dritten Werkstücks in den Wirkbereich des einlaufseitigen Paternosters 10 gebracht wird, wie aus Teilfigur 6g ersichtlich ist. In der Betriebsphase gemäß Teilfigur 6h erfolgt wiederum ein Hubschritt des Korbs 4. Anschließend erfolgt gemäß Teilfigur 6i wiederum ein Schritt des Einlaufabschnitts der Längsfördereinrichtung 9. Hierauf folgt gemäß Teilfigur 6j ein Schritt der gegenläufigen Paternoster, womit diese wieder aufnahmefähig sind, so daß beim nächsten gemeinsamen Schritt der Längsfördereinrichtung und der Verschiebeeinrichtung gemäß Teilfigur 6k nunmehr im Wirkbereich des auslaufseitigen Paternosters 11 bereits das dritte Werkstück oberhalb des ersten und zweiten Werkstücks zu liegen kommt während im Wirkbereich des einlaufseitigen Paternosters 10 das sechste Werkstück unterhalb des vierten und fünften Werkstücks eingelaufen ist. In dieser Weise könnte die Aufnahme von Werkstücken fortgesetzt werden, bis das Aufnahmevermögen des Puffers erschöpft ist, das heißt bis der Korb 4 sich in seiner obersten Position befindet.

Bei dem der Figur 6 zugrundeliegenden Fall soll nun keine weitere Einpufferung mehr erfolgen. Vielmehr soll nun der Paternoster 11 im selben Takt Werkstücke abgeben, wie der Paternoster 10 mit weiteren Werkstücken beschickt wird, wobei diese die die Längsfördereinrichtung 9 überragenden Abschnitte der Paternoster 10, 11 einfach durchwandern.Bei diesem Durchlaufbetrieb entfällt der Hub des Korbs 4. Auf jeden Schritt der Längsfördereinrichtung und der Verschiebeeinrichtung erfolgt hierbei ein Schritt der gegenläufigen Paternoster. Ausgehend von der Situation gemäß Teilfigur 6k werden nun beim nächsten Schritt der Paternoster die im Wirkbereich des Paternosters 11 sich befindenden ersten zweiten und dritten Werkstücke um eine Position nach unten versetzt, während im Wirkbereich des Paternosters 10 sich befindenden vierten, fünften und sechsten Werkstücke um eine Position nach oben versetzt werden, wobei das sechste Werkstück von der Längsfördereinrichtung abgehoben, das vierte Werkstück in Wirkverbindung mit der Verschiebeeinrichtung gebracht, das dritte Werkstück außer Eingriff mit der Verschiebeeinrichtung gebracht und das erste Werkstück auf die Längsfördereinrichtung abgelegt werden, wie Teilfigur 6l erkennen läßt. Beim nun folgenden nächsten Schritt der Längsfördereinrichtung und der Verschiebeeinrichtung werden ein weiteres siebtes Werkstück unterhalb des sechsten Werkstücks eingefahren und das erste Werkstück aus dem Puffer ausgefahren, während das vierte Werkstück oberhalb des dritten Werkstücks positioniert wird, wie Teilfigur 6m zeigt. Der nun folgende Schritt der Paternoster ergibt wieder die Situation gemäß Teilfigur 6l, lediglich mit dem Unterschied, daß nun bereits das zweite Werkstück auf der Längsfördereinrichtung abgelegt wird und das siebte Werkstück das unterste Werkstück im Wirkbereich des Paternosters 10 ist, wie Teilfigur 6n zeigt. Der nun folgende Schritt der Längsfördereinrichtung und der Verschiebeeinrichtung ergibt wiederum die Situation der Teilfigur 6m mit dem Unterschied, daß ein achtes Werkstück in den Wirkbereich des einlaufseitigen Paternosters 10 eingelaufen ist und das zweite Werkstück aus dem Puffer ausgelaufen ist, wie aus Teilfigur 6o entnehmbar ist. Dieser Durchlaufbetrieb kann beliebig fortgesetzt werden, bis entweder eine erneute Betriebsstörung eine Fortsetzung der Betriebsweise "Einpuffern" erforderlich macht oder der Materialnachschub aufhört, so daß die Füllung des Puffers abgebaut wird. Dies liegt den Teilfiguren 6p bis 6z zugrunde.

Bei der Betriebsweise "Auspuffern" machen wie beim Einpuffern zwischen den Schritten der Längsfördereinrichtung die Paternoster und der Korb jeweils abwechselnd einen Schritt, lediglich mit dem Unterschied, daß die Schritte des Korbs 4 nach unten gehen. Die Längsfördereinrichtung ist in diesem Fall lediglich mit ihrem ausgangsseitigen Abschnitt im Betrieb, so daß kein weiterer Materialnachschub erfolgt. Die Verschiebeeinrichtung läuft wiederum mit jedem zweiten Schritt der Längsfördereinrichtung im Anschluß an einen Schritt der Paternoster. Auf diese Weise wird, wie die Teilfiguren 6p bis 6z zeigen, ein Werkstück nach dem anderen vom Paternoster 10 in den Wirkbereich des Paternosters 11 gebracht und anschließend aus dem Puffer entfernt, bis zum letzten, hier achten Werkstück, wie Teilfigur 6z zeigt.

Aus der schematischen Darstellung gemäß Figur 6 ist gut erkennbar, daß die Werkstücke in jedem Falle in der Reihenfolge ihres Einlaufs in den Puffer auch wieder aus dem Puffer abgegeben werden und daß ein Wenden der Werkstücke unterbleibt, so daß die einlaufseitig nach oben weisende Seite der Werkstücke auch auslaufseitig nach oben weist und umgekehrt.

Vorstehend ist ein bevorzugtes Ausführungsbeispiel der Erfindung mit zwei parallelen Paternostern näher erläutert. Selbstverständlich wäre es aber auch denkbar, Die Anzahl der Paternoster paarweise aufzustocken und vier, sechs, usw. Paternoster vorzusehen, um die Pufferkapazität zu erhöhen. In diesem Falle erfolgt beim Ein-bzw. Auspuffern der Hub des Korbs nach jeder der Anzahl der vorhandenen Pufferstrecken entsprechenden Anzahl von Schritten der Längsfördereinrichtung.

**Ansprüche**

1. Verfahren zum Transport von Werkstücken, insbesondere Leiterplatten, die aufeinander folgend entlang einer Transportstrecke schrittweise voranbewegt werden, **dadurch gekennzeichnet, daß** die Werkstücke zur Pufferung über wenigstens eine Schleife mit zwei zu sich gegenläufigen, quer zur Transportstrecke gerichteten Pufferstrecken umlenkbar sind, deren Länge gemeinsam in Abhängigkeit von einer Zunahme oder Abnahme ihrer Füllung verändert wird, wobei nach jeder der Anzahl der vorhandenen Pufferstrecken entsprechenden Anzahl von Schritten der Transportstrecke der gesamte Puffer bei in ihm ruhenden Pufferstrecken um einen Schritt und dazwischen nach jedem Schritt der Transportstrecke die Pufferstrecken bei ruhendem Puffer um jeweils einen Schritt bewegt werden und wobei nach jeder Bewegung der Pufferstrecken bei ruhendem Puffer am Ende der Pufferstrecken eine zur Transportstrecke parallele Übersetzung der Werkstücke von einer Pufferstrecke zur nächsten erfolgt.

2. Verfahren nach Anspruch 1, **dadurch gekennzeichnet, daß** die Länge der Pufferstrecken bei gleichbleibender Füllung des Puffers durch Wegfall der Pufferbewegung gleichgehalten wird und daß die Länge der Pufferstrecken beim Auffüllen des Puffers mit jeder Pufferbewegung verlängert und beim Entleeren des Puffers verkürzt wird, wobei bei zwei gegenläufigen Pufferstrecken zum Ein- bzw. Auspuffern zwischen aufeinanderfolgenden Schritten der Transportstrecke abwechselnd jeweils ein Schritt der Pufferstrecken oder ein Schritt des Puffers erfolgen und daß mit jedem zweiten Schritt der Transportstrecke im Anschluß an einen Schritt der Pufferstrecken am von der Transportstrekke entfernten Pufferende eine umlenkungsfreie Werkstücksverschiebung von der einen Pufferstrecke zur anderen Pufferstrecke erfolgt.

3. Vorrichtung zum Transport von Werkstükken, insbesondere Leiterplatten, vorzugsweise zur Durchführung des Verfahrens nach einem der vorhergehenden Ansprüche 1 bis 2, mit einer Längsfördereinrichtung und einem quer hierzu angeordneten Puffer, **dadurch gekennzeichnet, daß** die Längsfördereinrichtung (9) durch einen quer zu ihr bewegbaren Korb (4) hindurchführt, auf dem wenigstens zwei in Laufrichtung der Längsfördereinrichtung (9) gegeneinander versetzte, parallel zur Bewegungsrichtung des Korbs (4) angeordnete, gegenläufig zueinander antreibbare Paternoster (10 bzw. 11) vorgesehen sind, die im Bereich ihrer der Längsfördereinrichtung (9) zugewandten Äste mit parallel zur Längsfördereinrichtung (9) verschiebbar geführten Werkstückträgern (15) bestückbar sind, die im Bereich zwischen den Astenden die Längsfördereinrichtung (9) kreuzen und gegen Verschieben gesichert sind und die im Bereich der Astenden mittels einer auf dem Korb (4) vorgesehenen Verschiebeeinrichtung (24) gegenläufig um den Abstand der Paternoster (10, 11) parallel zur Längsfördereinrichtung (9) verschiebbar sind.

4. Vorrichtung nach Anspruch 3, **dadurch gekennzeichnet, daß** die Längsfördereinrichtung (9), der Korb (4), die Paternoster (10, 11) und die Verschiebeeinrichtung (24) schrittweise antreibbar und die Antriebseinrichtungen so steuerbar sind, daß nach jedem Schritt der Längsfördereinrichtung (9) der Korb (4) oder im Wechsel die Paternoster (10, 11) antreibbar sind, wobei die Verschiebeeinrichtung (24) zusammen mit der Längsfördereinrichtung (9) nach jeder Aktivierung der Paternoster (10, 11) antreibbar ist.

5. Vorrichtung nach einem der vorhergehenden Ansprüche 3 oder 4, **dadurch gekennzeichnet, daß** der Korb (4) in einem vom der Längsfördereinrichtung (9) durchsetzten Turm (1) auf- und abbewegbar aufgenommen ist, dessen lichte Höhe die Höhe des Korbs (4) zumindest um die Länge der geraden Trums der Paternoster (10, 11) übersteigt und daß die Längsfördereinrichtung (9) zumindest mit der Länge der geraden Trums der Paternoster (10, 11) entsprechendem Bodenabstand angeordnet ist.

6. Vorrichtung nach Anspruch 5, **dadurch gekennzeichnet, daß** im Bereich der Ecken des Turms (1) Säulen (2) vorgesehen sind, die im Bereich ihrer inneren Kanten vorzugsweise einstellbar angebrachte Führungsschienen (3) tragen, an denen jeweils im Bereich der Ecken des Korbs (4) rechtwinklig zueinander angeordete Rollen (5) geführt sind und daß der im Bereich der Ecken des einen rechteckigen Querschnitt aufweisenden Turms (1) geführte, ebenfalls einen rechteckigen Querschnitt aufweisende Korb (4) an im Bereich des oberen Endes des Turms (1) umgelenkten Hubketten (6) aufgehängt ist.

7. Vorrichtung nach einem der vorhergehenden Ansprüche 3 bis 6, **dadurch gekennzeichnet, daß** die Paternoster (10, 11) jeweils an endlosen, im Bereich des oberen und unteren Endes des Korbs (4) umgelenkten Läufern (13, 14) befestigte, in Laufrichtung der Längsfördereinrichtung (9) verlaufende Lagerschienen (16) aufweisen, auf denen die Werkstückträger (15) verschiebbar aufnehmbar sind, die mit seitlichen, zwischen jeweils zwei Lagerschienen laufenden Rollen (18) versehen sind, wobei zumindest die Lagerschienen eines Läufers (13) der Paternoster (10, 11) und die dazugehörigen Rollen (18) der Werkstückträger (15) einander ergänzende, prismenförmige Querschnitte aufweisen.

8. Vorrichtung nach Anspruch 7, **dadurch gekennzeichnet, daß** die gegeneinander versetzten Paternoster (10, 11) durch wenigstens ein Winkelgetriebe (21) mit einem Eingang und zwei Ausgängen antriebsmäßig miteinander verbunden sind und jeweils zwei bezüglich der Längsfördereinrichtung (9) einander gegenüberliegende Läufer (13, 14) mit parallelen, paarweise auf gleichem Niveau sich befindenden Lagerschienen (16) aufweisen.

9. Vorrichtung nach einem der vorhergehenden Ansprüche 3 bis 8, **dadurch gekennzeichnet, daß** die Werkstückträger (15) im Bereich zwischen den am oberen und unteren Ende des Korbs angeordneten Umlenkbereichen der Paternoster (10, 11) durch am Korb (4) befestigte, parallel zur Paternosterlaufrichtung angeordnete Führungsschienen (30) gegen Verschieben gesichert sind, die jeweils einen im Umkehrbereich endenden Führungskanal für ein hierin einlaufendes Halteelement (31) der Werkstückträger (15) aufweisen und daß die Verschiebeeinrichtung (24) als die beiden Paternoster (10, 11) umfassendes Umlauforgan ausgebildet ist, das mit Mitnehmern (29) versehen ist, mit denen an den Werkstückträgern (15) vorgesehene Gegenhalter durch den jeweils zugehörigen Paternoster (10 bzw. 11) in und außer Eingriff bringbar sind.

10. Vorrichtung nach einem der vorhergehenden Ansprüche 3 bis 9, **dadurch gekennzeichnet, daß** die als durch seitlich gegeneinander versetzte Bänder gebildete Bandführung ausgebildete Längsfördereinrichtung (9) im Bereich jedes Paternosters (10 bzw. 11) jeweils wenigstens eine Lücke (34) aufweist und daß die Werkstückträger (15) jeweils wenigstens einen über die Breite des Korbs (4) durchgehenden, die Lücken (34) der Längsfördereinrichtung (9) passierenden Querholm (32) aufweisen, an dem zwischen den Bändern der die Längsfördereinrichtung (99 bildenden Bandführung hindurchbewegbare Tragleisten (33) befestigt sind.

FIG. 1

EP 0 351 633 A2

# FIG. 2

## FIG. 3

## FIG. 4

## FIG. 5

FIG.6